# FASCICULE DE BREVET EUROPEEN

(11) **EP 4 357 173 B1**
(45) Date de publication et mention de la délivrance du brevet: **08.04.2026**
(21) Numéro de dépôt: 23203262.3
(22) Date de dépôt: 12.10.2023
(51) Int. Cl.: B60J 7/11, B62D 25/06

(54) **AGENCEMENT COMPORTANT UNE CAISSE DE VÉHICULE, UN TOIT FIXE OU UN MODULE DE TOIT PARTIELLEMENT AMOVIBLE**
ANORDNUNG MIT EINEM WAGENKASTEN, EINEM FESTEN DACH ODER EINEM TEILWEISE ABNEHMBAREN DACHMODUL
ASSEMBLY COMPRISING A VEHICLE BODY, A FIXED ROOF OR A PARTIALLY REMOVABLE ROOF MODULE

(30) Priorité: 17.10.2022 FR 2210708
(43) Date de publication de la demande: 24.04.2024
(73) Titulaire: Renault s.a.s, 92100 Boulogne Billancourt (FR)
(72) Inventeur: CHAUFOUR, Olivier, 91940 LES ULIS (FR); HUBERT, Florent, 91940 LES ULIS (FR)

(56) Documents cités:
- DE-A1- 102016 014 314
- US-B2- 11 241 944

## Description

L'invention est du domaine des véhicules, notamment des automobile. Elle concerne un agencement comportant une structure d'une caisse d'un véhicule, la structure comportant en partie sommitale des brancards reliés entre eux par des traverses, notamment des traverses avant et arrière reliées respectivement à un pare-brise ou une lunette arrière. La structure de caisse est apte à recevoir un toit fixe ou un module de toit partiellement amovible. L'agencement comprend des moyens de fixation et de verrouillage des panneaux amovibles. L'invention concerne un véhicule ayant un tel agencement.

Il est connu des véhicules comportant une structure de caisse ayant une rigidité élevée du fait de l'assemblage de pièces réalisées en aluminium. Le recours à ce matériau confère légèreté, donc un ratio puissance/poids élevé, ce qui peut conférer une vocation sportive de telles véhicules.

La rigidité de caisse ouvre la possibilité de transformer la typologie du véhicule sans avoir à modifier les éléments structurants. Il devient alors possible de transformer un véhicule à structure renforcée en un véhicule à toit ouvrant, mais pour ne pas dégrader le ratio puissance/poids, il convient de trouver un toit ouvrant qui satisfait à l'exigence de légèreté propre à un tel véhicule.

Cependant, les solutions de toit ouvrants connues font appel aujourd'hui à des technologies complexes qui ont aussi comme inconvénients la multiplication des pièces nécessaires à leur fonctionnement, ce qui tend à alourdir considérablement le poids de la fonction « toit ouvrant ». Cette fonction engendre l'ajout de masse qui nécessite une modification de la structure de caisse. Il existe dons des structures de caisse pour véhicule à toit fixe et des structures de caisse pour véhicule à toit ouvrant, chacune devant satisfaire à des normes de plus en plus exigeantes et contraignantes en termes de conception.

Il a donc été fait le constat qu'une structure de caisse légère accueillant un toit ouvrant connu pénalise le ratio puissance/poids. En tant que second constat, il ressort qu'une transformation d'un véhicule conçu avec un toit fixe en un véhicule ayant un toit ouvrant nécessite des adaptations structurelles pour rendre la structure de caisse conforme aux normes en vigueur.

Il est également connu de US11241944 B2 et DE 10 2016 014314 A1 un toit ouvrant comportant un unique panneau amovible dont le rangement et la manipulation sont fortement contraignantes pour l'utilisateur désireux de découvrir le toit de son véhicule.

Une telle situation devient inadmissible en ce sens.

L'invention vise à apporter une solution à cet inconvénient en proposant un agencement selon la revendication 1.

L'agencement objet de l'invention peut comprendre les caractéristiques suivantes, prises séparément ou en combinaison entre elles :
- les ensembles de platines d'assemblage sont disposés le long d'axes transversaux sensiblement parallèles qui délimitent des bords avant et arrière de la gouttière ;
- le bord avant et/ou le bord arrière de la gouttière comprend des platines femelles latérales et au moins une platine femelle centrale, notamment deux platines femelles centrales, les platines femelles latérales étant respectivement reliées au support par l'intermédiaire d'une interface simple, les platines femelles centrales étant reliées au support par l'intermédiaire d'une unique interface double ;
- l'interface simple comprend une seule platine femelle destinée à coopérer avec une platine mâle fixée à l'un ou l'autre des panneaux amovibles, l'interface double comprend deux platines femelle centrale destinée à coopérer avec des platines mâles fixées respectivement à l'un et l'autre des panneaux amovibles ;
- la gouttière comprend localement des bords tombés sur lesquelles sont fixées des interfaces simple et double, notamment au moyen de rivets ;
- chaque interface est de section sensiblement en U, avec deux branches parallèles reliées l'une à l'autre par une branche de liaison ;
- la branche de liaison comprend des futs dans chacun desquels est monté un insert métallique destiné à la fixation par vissage d'un platine femelle ;
- chaque panneau amovible comprend des inserts métalliques destiné à la fixation par vissage de platines mâle, notamment à proximité des bords avant et arrière de chacun des panneaux amovibles ;
- le panneau amovible comprend un panneau de mousse acoustique interposée entre la paroi intérieure et la peau extérieure, et fixé par collage à la paroi intérieure et/ou à la peau extérieure ;
- la paroi intérieure est fixée à la peau extérieure par un cordon de colle s'étendant à proximité de leur bord périphérique ;
- le module de toit comprend au moins un moyen de verrouillage de chaque panneau amovible au support, notamment un unique moyen de verrouillage disposé latéralement au panneau ;
- le moyen de verrouillage est du type d'une grenouillère qui comporte un socle fixé au panneau amovible, notamment à la paroi intérieure, un levier monté à rotation sur le socle et relié à une lame, un crochet sur lequel la lame est destinée à venir en prise pour verrouiller le panneau, le crochet étant fixé au support, notamment au niveau de la gouttière, notamment au niveau de la paroi de fond.

L'invention a aussi trait à un véhicule, notamment du type d'une berline à deux places, comprenant un agencement ayant les caractéristiques susmentionnées.

Le véhicule peut en outre comprendre un module de toit partiellement amovible dont un support comprend une unique ouverture s'étendant verticalement au droit d'une unique rangée de sièges, notamment des sièges conducteur et passager.

Le véhicule peut comprendre une garniture intérieure de pavillon convenant à la fois à un toit fixe et un module de toit partiellement amovible, la garniture intérieure comprenant une ouverture rendant notamment visible le toit fixe depuis l'intérieur du véhicule.

Les dessins annexés représentent, à titre d'exemple, un mode de réalisation d'un encadrement de porte selon l'invention.
La [Fig.1] représente selon une vue de trois quart avant un véhicule en perspective, selon l'agencement de l'invention ;
La [Fig.2] représente le véhicule de la figure 1 avec un toit fixe ;
La [Fig.3] représente le véhicule de la figure 1 avec un module de toit partiellement amovible ;
La [Fig.4] représente le module de toit de la figure 3 avec une garniture intérieure, selon une vue en perspective ;
La [Fig.5] représente selon une vue en perspective en éclatée les éléments fixes du module de toit, selon l'invention ;
La [Fig.6] représente selon une vue en coupe A-A de la figure 3, des moyens de fixation et de verrouillage d'une partie latéral gauche d'un module de toit, selon l'agencement de l'invention ;
La [Fig.7] représente les panneaux amovibles du module de toit de l'invention, selon une vue en perspective en éclatée ;
La [Fig.8] représente, selon une vue en coupe A-A de la figure 3, des moyens de fixation et de verrouillage d'une partie centrale d'un module de toit, selon l'agencement de l'invention ;
La [Fig.9] représente un moyen de fixation d'une partie latérale du module de toit de l'invention, selon une vue de l'intérieur du véhicule ;
La [Fig.10] représente un moyen de fixation pris isolément, du module de toit de l'invention, selon une vue en perspective en éclatée.

On se référera à un repère orthonormé direct XYZ, dans lequel l'axe X désigne la direction longitudinale arrière-avant du véhicule, orienté vers l'avant, l'axe Y désigne la direction transversale du véhicule et est orienté de la gauche vers la droite du véhicule, la gauche et la droite étant définies selon le point de vue d'un conducteur du véhicule, l'axe Z désigne la direction verticale, et est orienté du bas vers le haut, le véhicule reposant sur un sol horizontal.

Les termes « supérieur » et « inférieur » sont définis en référence à l'axe Z. Les termes « avant » et « arrière » sont définis en référence à l'axe X. L'invention propose un agencement 10 comportant une structure 1 d'une caisse 2 d'un véhicule 3, la structure 1 comportant en partie sommitale 11 des brancards 112, 113 reliés entre eux par des traverses 114, 115, notamment des traverses avant et arrière reliées respectivement à un pare-brise 4 ou une lunette arrière 5, la structure 1 délimitant une unique ouverture 116 destinée à être obturée par un toit fixe 12, notamment un toit en matériau composite, ou par un module de toit 13 partiellement amovible.

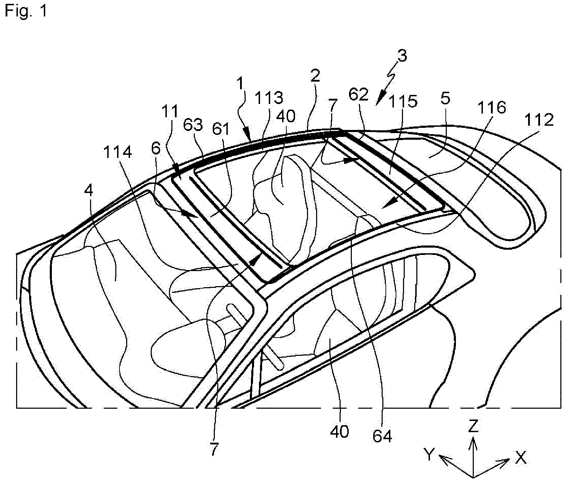

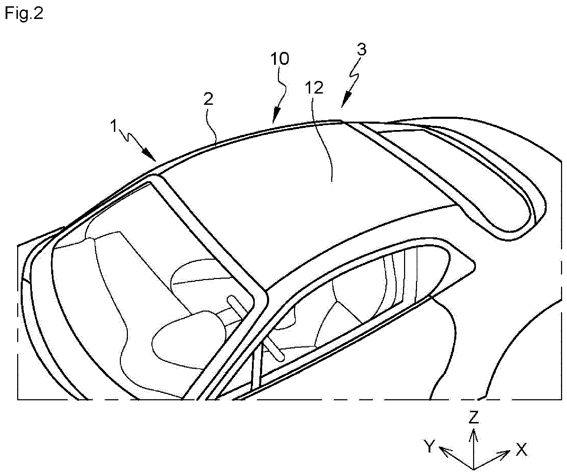

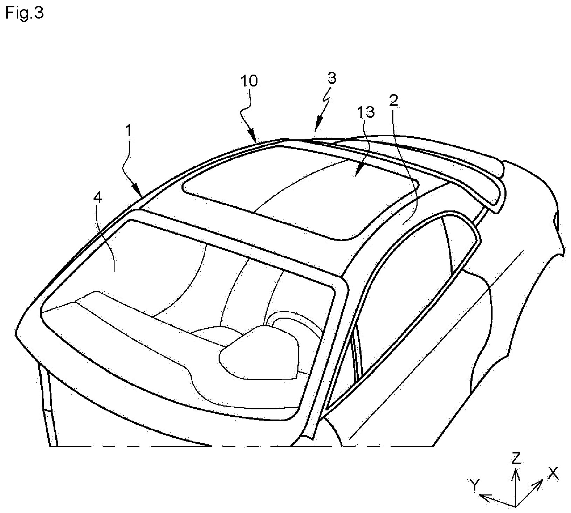

La figure 1 représente un véhicule 3 vu de dessus de trois quart avant. Le véhicule est de type à 2 places à cet effet il comprend deux sièges 40. La caisse 2 du véhicule délimite un habitacle, sur lequel sont assemblés des ouvrants latéraux, mais aussi un pare-brise 4 en partie avant, une lunette 5 en partie arrière. La partie sommitale 11 du toit comprend une unique ouverture 116 dont les bords latéraux sont délimités par des brancards latéraux 112 et 113 s'étendant sensiblement le long de l'axe X, et dont les bords transversaux sont délimités par des traverses avant 114 et 115 s'étendant sensiblement le long de l'axe X. La caisse 2 est réalisée par un assemblage de pièces en aluminium reliées entre elles par un procédé de collage rivetage. Les traverses avant et arrière ainsi que les brancards latéraux comprennent respectivement des faces orientées vers l'extérieur du véhicule sur lesquelles un toit fixe 12 visible sur la figure 2 ou un module de toit 13 partiellement amovible visible sur la figure 3 est rapporté par le dessus et collé. Pour ce faire, la caisse 2 comprend une piste 6 d'encollage qui est préférentiellement continue, Han ce sens qu'elle comprend des portions jointives, plus précisément des portions transversales avant 61 et arrière 62 ainsi que des portions latérales gauche 63 et droite 64 qui s'étendent respectivement le long de la traverse avant 114, de la traverse arrière 115, du brancard latéral gauche 112, et du brancard latéral droit 113. Les portions 61, 62, 63 ,64 de colle sont jointes les unes aux autres par leurs extrémités sorte qu'elles forment une piste d'encollage continue se présentant sous la forme d'un anneau d'encollage. Les portions de colle sont disposées successivement l'une après l'autre.

Elles peuvent être déposé par une seule opération, notamment une opération robotisée. La caisse 2 peut comprendre une piste secondaire 7 d'encollage qui s'étend à proximité immédiate du bord arrière de la traverse avant 114. La caisse 2 peut comprendre une piste secondaire 7 d'encollage qui s'étend à proximité immédiate du bord avant de la traverse arrière 115. Du fait de sa localisation, la piste secondaire 7 d'encollage a pour fonction de réduire le bruit pouvant être véhiculé par la traverse avant 114 ou arrière 115.

Sur la figure 2 est représenté le véhicule 3 de la figure 1 comportant un toit fixe 12 fermant l'ouverture 116 de la caisse 2.

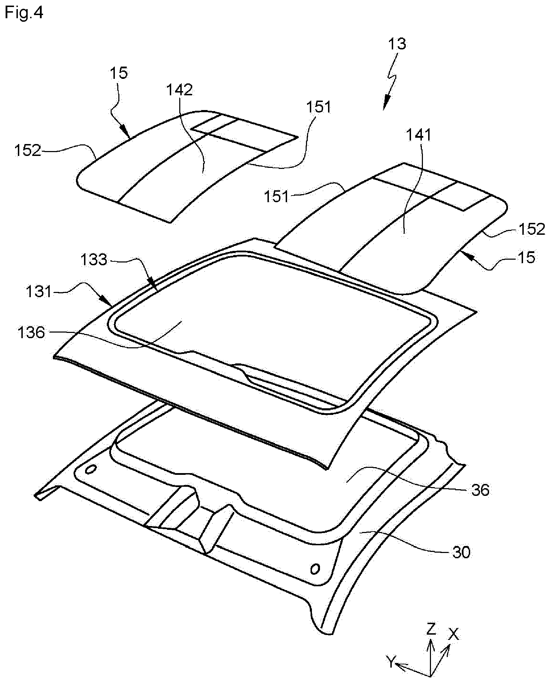

Sur la figure 3 est représenté le véhicule 3 de la figure 1 comportant un module de toit 13 partiellement amovible. On entend par le terme « partiellement amovible », un toit qui est hybride en ce sens qu'il comprend une partie fixé à la caisse par collage et au moins un partie mobile qui est apte à être montée de manière réversible sur la partie fixe. Sur la figure 4 est représenté, selon une vue schématique éclatée le module de toit 13 qui comprend un support 131 délimitant une ouverture 136 destinée à être fermée par deux panneaux amovibles 141 et 142. Chaque panneau amovible 14 comprend une paroi intérieure 16 qui est fixée à une peau extérieure 21 par un cordon 26 de colle s'étendant à proximité de leur bord périphérique. Le support 131 comprend une gouttière 133 s'étendant en périphérie de l'ouverture 136. Chaque panneau amovible 14 comprend un panneau de mousse acoustique 25 interposé entre la paroi intérieure 16 et la peau extérieure 21. Il est notamment fixé par collage à la paroi intérieure et/ou à la peau extérieure.

La gouttière 133 comprend un collecteur 200 d'eau qui traverse une paroi de la gouttière. Le collecteur 200 comprend un conduit apte à être est relié fluidiquement à un tuyau d'évacuation non représenté. Chaque panneau amovible 141 ou 142 comprend un bord périphérique 15 qui est destiné à coopérer avec la gouttière 133, notamment par ses bords latéraux extérieurs 152, une fois assemblés. Le bord périphérique 15 d'un panneau 14 amovible comprend un bord longitudinal intérieur 151 de telle sorte que les bords longitudinaux intérieures 151 de panneaux amovible gauche 141 et droit 142 sont disposés l'un contre l'autre, au jeu de montage près, une fois l'ouverture 136 fermée par ses panneaux 141 et 142 alors adjacents. Le montage des panneaux amovibles 141 et 142 sur le support 131 est conçu de telle manière que les panneaux sont disposés sensiblement à affleurement sur support 131 de sorte qu'il y a une continuité de ligne, sans rupture.

Le bord longitudinal intérieur 151 du panneau droit 142 comprend un élément d'étanchéité 182. Il peut s'agir d'un joint tubulaire assemblé sur une feuillure du panneau intérieur 16. Le profil du bord longitudinale 151 du panneau amovible droit 142 est de section sensiblement en forme de S couché. Le profil du bord longitudinale 151 du panneau amovible gauche 141 est de section sensiblement en forme de U inversé, de sorte qu'il est destiné à venir à recouvrement par le dessus du panneau amovible droit 142, notamment de l'élément d'étanchéité 182.

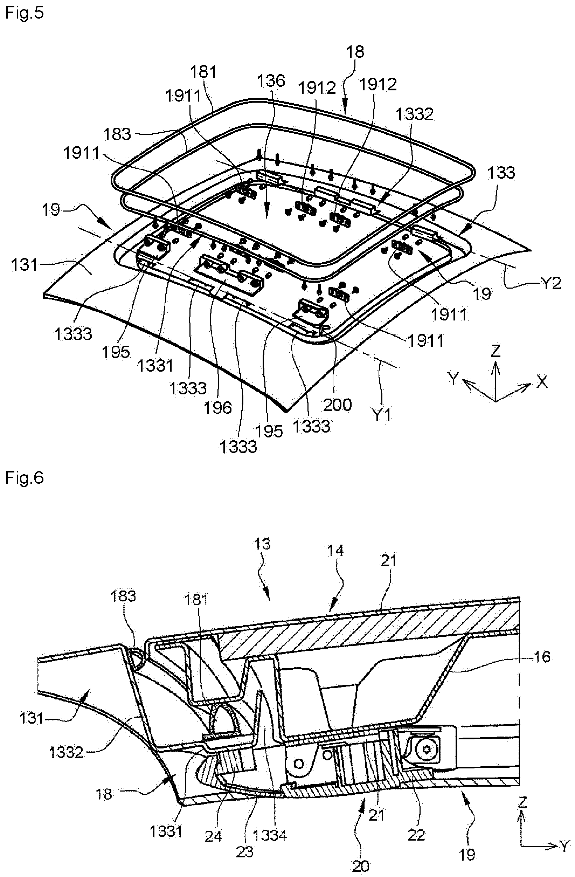

Sur la figure 6, la gouttière 133 est représentée en section transversale de telle sorte que la paroi intérieure 1334 est inclinée par rapport à la paroi de fond 1331 selon une inclinaison sensiblement identique mais d'angle opposé par rapport à une paroi extérieure 1332 de la gouttière 133, de telle sorte que la gouttière a une section transversale sensiblement en U. La paroi de fond 1331 comprend un joint d'étanchéité 181. La paroi extérieure 1332 comprend un second joint d'étanchéité 183.

Sur la figure 4 est représentée la garniture intérieure 30 de toit qui comprend une ouverture 36. Cette garniture intérieure 30 est utilisée quelle que soit la typologie du véhicule, à savoir le véhicule 3 avec le toit fixe 12 ou avec le module de toit 13. Dans la configuration du véhicule 3 avec un toit fixe 12, la garniture intérieure 30 laisse apparaitre de l'habitacle la face intérieure du toit. La fixation de la garniture 30 est réalisée par collage.

Le collage du toit fixe 12 ou du module de toit 13 peut être réversible. Cela offre la possibilité de transformer un véhicule équipé d'un toit fixe 12 en un véhicule équipé d'un module de toit 13. L'inverse reste aussi envisageable avec l'agencement objet de l'invention.

Sur la figure 5, les moyens de fixation 19 des panneaux 14 amovibles au support 131 sont représentés en partie avant et en partie arrière de l'ouverture 136 du module de toit 13.

Lesdits moyens de fixation 19 permettent un assemblage de manière réversible des panneaux amovibles 141 et 142. Pour ce faire, chacun des panneaux 14, comprend au moins une partie desdits moyens de verrouillage 19, le support 131 comportant au moins une partie complémentaire.

Sur la figure 5, les panneaux ne sont pas représentés par soucis de clarté.

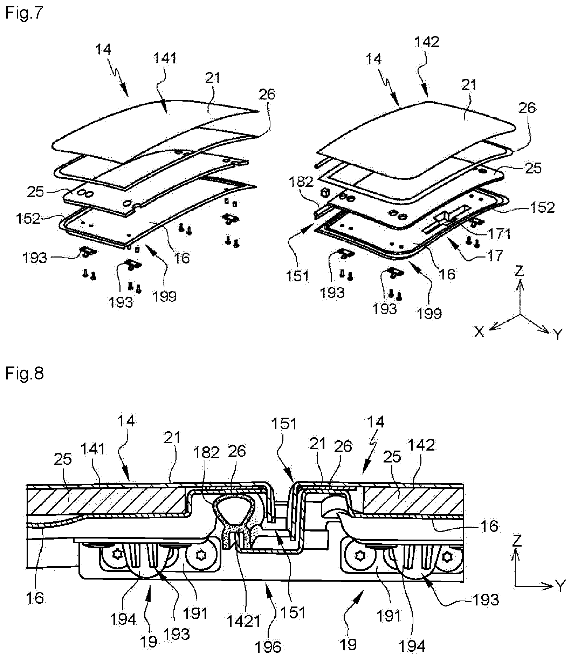

Chacun des moyens de fixation 19 comprend un ensemble formé d'une platine femelle 191 et d'une platine mâle 193 visible sur le figure 7. Chaque platine femelle 191 est fixée au support 131, directement au niveau d'un bord tombé 1333 prolongeant la gouttière 133 vers l'intérieur de l'ouverture 136. Chaque bord tombé 1333 s'étend dans un plan approximativement horizontal d'axe XY, en prolongeant la paroi intérieure 1334 de la gouttière 133. La platine femelle 191 est fixée au support 131 par l'intermédiaire d'une pièce d'interfaçage 195, 196.

Les moyens de fixation 19 s'étendent le long d'un axe transversal Y1 situé à proximité d'un bord avant 134 de la gouttière 133, et le long d'un axe transversal Y2 situé à proximité d'un bord arrière 135 de la gouttière 133. Les axes transversaux Y1 et Y2 sont parallèles entre eux.

Selon un mode de réalisation préféré, les moyens de fixation 19 se composent de quatre platines femelles 191 réparties le long de l'axe Y1, et de quatre platines femelles 191 réparties le long de l'axe Y2, sensiblement en vis-à-vis des platines placées sur l'axe Y1. Cela permet un usage des différents moyens de fixation en simultané durant la manœuvre du panneau amovible 14.

Le moyen de fixation comprend sur chaque axe transversal Y1 ou Y2 deux platines femelles latérales 1911 et des platines femelles centrales 1912.

Les platines femelles latérales 1911 sont reliées au support 131 par l'intermédiaire d'une interface simple 195. Les platines femelles centrales 1912 peuvent être reliées ensemble au support 131, par l'intermédiaire d'une interface double 196. Ainsi les bords avant 134 et arrière 135 de la gouttière 133 comprennent des platines femelles latérales 1911 et au moins une platine femelle centrale 1912, notamment deux platines femelles centrales 1912, de telle sorte que les platines femelles sont identiques les unes aux autres.

Chaque platine femelle 191 comprend une encoche 192 définissant un chemin de guidage vertical 1921 prolongé par un chemin de guidage transversal 1922, l'encoche ayant un profil sensiblement en L.

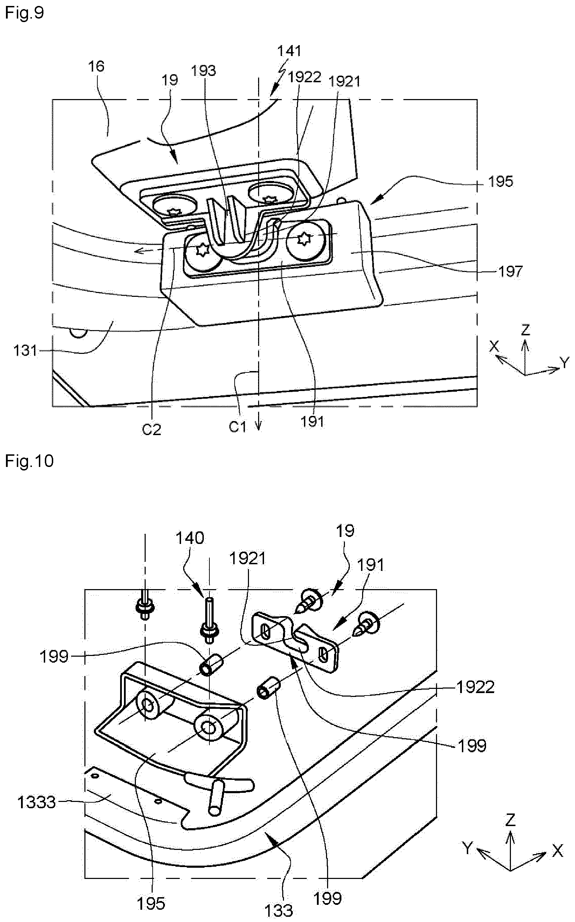

Chaque platine femelles 191 est assemblée à l'interface simple 195 ou double 196 par vissage au travers d'insert métallique 199. Chaque interface 195, 196 est de section transversale sensiblement en U, avec deux branches parallèles reliées l'une à l'autre par une branche de liaison 197. La branche de liaison comprend des futs 198 à l'intérieur de chacun desquels est disposé un insert métallique 199 destiné à la fixation par vissage d'un platine femelle 191. Les interfaces sont réalisées par moulage d'une matière plastique de telle sorte que les inserts métalliques 199 sont surmoulés. L'interface simple 195 ou double 196 est fixée au support 131 par des rivets 140 traversant un bord tombé 1333, comme cela est visible sur la figure 9.

Chacun des panneaux 14 comprend des platines mâle 193 qui sont destinées à coopérer avec les platines femelles 191 du support 131. Pour ce faire, chaque platine mâle comprend un doigt 194 destiné à venir en prise avec l'encoche 192 de la platine femelle 191 qui lui est associée. Chaque platine mâle 193 comprend un doigt 194 et une embase destinée à la fixation de la platine mâle au panneau 14, de sorte que ces derniers comprennent des inserts métalliques 199 destinés à la fixation par vissage de platines mâle 193. Les platines mâles 193 sont positionnées à proximité des bords avant et arrière de chacun des panneaux 14, 141, 142 amovibles.

Sur la figure 8 est représenté l'interface double 196 sur laquelle sont fixées par vissage deux platines femelles centrales 1912 qui ont un profil inversé en ce sens que le mouvement de chacun des panneaux 14 s'effectue pour partie vers l'extérieur. Comme on le verra plus en détail après, le montage du panneau gauche 141 requiert un mouvement de déplacement horizontal vers la gauche, tandis que le montage du panneau droit 142 requiert un mouvement de déplacement horizontal vers la droite.

Sur la figure 9, le panneau gauche amovible 141 est assemblé au support 131 par le biais d'un moyen de fixation 19 constitué d'une platine femelle, d'une interface simple 195, d'une platine mâle 193. La géométrie de l'encoche 192 qui est de profil sensiblement en L rend apte l'assemblage des panneaux 14 amovibles au support 131 notamment par une cinématique de montage comprenant une course de descente C1 d'axe sensiblement vertical Z, suivie d'une course latérale C2 d'axe sensiblement transversal Y dirigé de l'intérieur vers l'extérieur. Les courses C1 et C2 sont représentées en traits mixtes sur la figure 8, et sont définies par le chemin de guidage vertical 1921 prolongé par un chemin de guidage transversal 1922 de l'encoche 192. L'encoche 192 est ouverte vers le haut de sorte que le doigt 194 suit une direction de haut en bas lors du montage du panneau 14. En arrivant en butée verticale, le chemin de guidage transversal 1922 permet au doigt 194 un coulissement vers l'extérieur.

Afin de sécuriser l'assemblage des panneaux amovibles 14, 141, 142 sur le support 131, le module de toit 13 comprend au moins un moyen de verrouillage 20 de chaque panneau 14 amovible au support 131. Pour ce faire, chaque panneau 14 comprend un unique moyen de verrouillage qui est disposé latéralement au panneau 14. Le moyen de verrouillage 20 est localisé sur le panneau 14, à proximité de la poignée 171, soit à proximité du bord latéral extérieur 152 du panneau 14.

Cette architecture permet à l'utilisateur de manipuler depuis l'intérieur du véhicule le panneau amovible 14, notamment pour exercer le déplacement transversal par préhension de la poignée, après avoir positionné le panneau depuis l'extérieur pour engager les platines mâles 193 avec les platines femelles 191.

Le moyen de verrouillage 20 est du type d'une grenouillère qui comporte un socle 21 fixé au panneau 14 amovible, notamment à la paroi intérieure 16, un levier 22 monté à rotation sur le socle et relié à une lame 23 d'accroche. L'extrémité libre de la lame 23 est destinée à venir en prise avec un crochet 24 pour verrouiller le panneau 14, le crochet étant fixé au support 131. Sur la figure 6, le crochet 24 est positionné directement à la vertical du joint d'étanchéité 181. La face extérieure de la paroi de fond 1331 comprend le joint d'étanchéité 181, tandis que la face intérieure comprend le crochet 24.

Globalement, la grenouillère de verrouillage s'étend transversalement, de telle manière que la lame 23 d'accroche s'étend en saillie hors du bord latéral extérieur de la paroi intérieure 16 du panneau 14.

Les moyens de fixation 18 et de verrouillage 19 tels que précédemment décrits permettent avantageusement une manipulation facilité du fait notamment du poids contenu de chacun des panneaux mais aussi de la cinématique d'assemblage.

Du fait de cette facilité, le temps de transformation du véhicule 3 est réduit. Les panneaux amovibles 14 peuvent être retirés en procédant comme suit :
- déverrouillage du panneau gauche 141 et droit 142 par action sur les moyens de verrouillage 20, depuis l'intérieur du véhicule ;
- déplacement du panneau gauche 141 selon le chemin C2 en sens inverse à celui de la figure 9, soit un déplacement en transversal de sorte à rapprocher le panneau gauche 141 du panneau droit 142, jusqu'à une quasi mise en contact des bords longitudinaux intérieure 152 des panneaux 141 et 142 entre eux, depuis l'intérieur du véhicule par l'utilisation de la poignée de préhension ;
- depuis l'extérieur du véhicule, déplacement du panneau gauche 141 verticalement, selon le chemin C1 en sens inverse à celui de la figure 9, de sorte qu'il puisse être totalement retiré du support 131 ;
- déplacement du panneau droit 142 selon le chemin C2 de la figure 9, soit un déplacement en transversal depuis l'intérieur du véhicule par l'utilisation de la poignée de préhension ;
- depuis l'extérieur du véhicule, déplacement du panneau droit 142 verticalement, selon le chemin C1 en sens inverse à celui de la figure 9, de sorte qu'il puisse être totalement retiré du support 131.

Les panneaux amovibles 14 peuvent être repositionnés afin de fermer l'ouverture 136 en suivant les étapes décrites ci-dessus mais dans un ordre inversé.

L'ouverture 136 étant fermée par le placement de deux panneaux amovibles 141 et 142, leur poids est réduit comparativement à une solution avec un seul panneau. En outre, chaque panneau 14 amovible est de conception allégée du fait du recours à de la matière composite, telle qu'une matière à base d'époxy chargé avec de la fibre de carbone. Le module de toit 13 est particulièrement adapté à des véhicules à caractère sportif, tel que l'unique ouverture 136 s'étend verticalement au droit d'une unique rangée de sièges 40, à savoir le siège du conducteur et l'unique autre siège dédié au passager.

Avantageusement, les panneaux amovibles 14 peuvent être totalement dissociés du toit du véhicule 3. Après retrait, du fait de leur dimension et poids, ils peuvent être aisément placés à l'intérieur du véhicule, par exemple derrière les deux sièges 40, ou rangés à l'intérieur d'un coffre, notamment un coffre situé en partie avant du véhicule, notamment s'il s'agit d'un véhicule ayant un moteur central arrière ou un véhicule à propulsion électrique.

## Revendications

1. Agencement (10) comportant une structure (1) d'une caisse (2) d'un véhicule (3), la structure (1) comportant en partie sommitale (11) des brancards (112, 113) reliés entre eux par des traverses (114, 115), notamment des traverses avant et arrière reliées respectivement à un pare-brise (4) ou une lunette arrière (5), l'agencement comprenant un module de toit (13) partiellement amovible de telle sorte que la structure (1) délimitant une unique ouverture (116) est destinée à être obturée par un module de toit (13) partiellement amovible comportant un support sur lequel sont assemblés de manière réversible deux panneaux (14 ; 141, 142) amovibles comprenant chacun au moins un moyen de fixation (19) au support (131), **caractérisé en ce que** le moyen de fixation (19) comprend au moins un ensemble de platines d'assemblage formé d'une platine femelle (191) avec au moins une encoche (192) et d'une platine male (193) avec un doigt (194) destiné à venir en prise avec l'encoche, l'encoche (192) comprenant un chemin de guidage vertical (1921) prolongé par un chemin de guidage transversal (1922), l'encoche ayant un profil sensiblement en L afin de rendre apte l'assemblage des panneaux (14) amovibles au support (131), notamment par une cinématique de montage comprenant une course de descente (C1) d'axe sensiblement vertical (Z) suivie d'une course latérale (C2) d'axe sensiblement transversal (Y) dirigé de l'intérieur vers l'extérieur.

2. Agencement (10) selon la revendication précédente, **caractérisé en ce que** les ensembles de platines d'assemblage sont disposés le long d'axes transversaux (Y1, Y2) sensiblement parallèles qui délimitent des bords avant et arrière d'une gouttière (133).

3. Agencement (10) selon la revendication précédente, **caractérisé en ce que** le bord avant (1331) et/ou le bord arrière (1332) de la gouttière (133) comprend des platines femelles latérales (1911) et au moins une platine femelle centrale (1912), notamment deux platines femelles centrales (1912), les platines femelles latérales (1911) étant respectivement reliées au support par l'intermédiaire d'une interface simple (195) , les platines femelles centrales (1912) étant reliées au support par l'intermédiaire d'une unique interface double (196).

4. Agencement (10) selon la revendication précédente, **caractérisé en ce que** l'interface simple (195) comprend une seule platine femelle (191) destinée à coopérer avec une platine mâle (193) fixée à l'un ou l'autre des panneaux (14) amovibles, l'interface double (196) comprend deux platines femelle centrale (1912) destinée à coopérer avec des platines mâles (193) fixées respectivement à l'un et l'autre des panneaux (14) amovibles.

5. Agencement (10) selon l'une quelconque des revendications précédentes, **caractérisé en ce que** le panneau (14) amovible comprend un panneau de mousse acoustique (25) interposée entre une paroi intérieure (16) et une peau extérieure (21).

6. Agencement (10) selon l'une quelconque des revendications précédentes, **caractérisé en ce que** le module de toit (13) comprend au moins un moyen de verrouillage (20) de chaque panneau (14) amovible au support (131), notamment un unique moyen de verrouillage disposé latéralement au panneau (14).

7. Agencement (10) selon la revendication précédente, **caractérisé en ce que** le moyen de verrouillage (20) est du type d'une grenouillère qui comporte un socle (27) fixé au panneau (14) amovible, notamment à la paroi intérieure (16), un levier (22) monté à rotation sur le socle et relié à une lame (23), un crochet (24) sur lequel la lame est destinée à venir en prise pour verrouiller le panneau (14), le crochet étant fixé au support (131), notamment au niveau de la gouttière (133), notamment au niveau d'une paroi de fond (1331).

8. Véhicule (3), notamment du type d'une berline à deux places, **caractérisé en ce qu'**il comprend un agencement (10) selon l'une quelconque des revendications précédentes.

9. Véhicule selon la revendication précédente, **caractérisé en ce qu'**il comprend un module de toit (13) partiellement amovible dont un support (131) comprend une unique ouverture (136) s'étendant verticalement au droit d'une unique rangée de sièges (40), notamment des sièges conducteur et passager.

## Patentansprüche

1. Anordnung (10), die eine Struktur (1) eines Aufbaus (2) eines Fahrzeugs (3) umfasst, wobei die Struktur (1) im oberen Bereich (11) Längsträger (112, 113) umfasst, die durch Querträger (114, 115) miteinander verbunden sind, insbesondere durch einen vorderen und einen hinteren Querträger, die jeweils mit einer Windschutzscheibe (4) bzw. einer Heckscheibe (5) verbunden sind, wobei die Anordnung ein teilweise abnehmbares Dachmodul (13) derart beinhaltet, dass die Struktur (1), die eine einzige Öffnung (116) begrenzt, dazu bestimmt ist, durch ein teilweise abnehmbares Dachmodul (13) verschlossen zu werden, das eine Halterung umfasst, an der zwei abnehmbare Paneele (14; 141, 142), die jeweils mindestens ein Mittel zur Befestigung (19) an der Halterung (131) beinhalten, reversibel angebracht sind, **dadurch gekennzeichnet, dass** das Befestigungsmittel (19) mindestens einen Satz Montageplatten beinhaltet, der aus einer Aufnahmeplatte (191) mit mindestens einer Aussparung (192) und einer Steckplatte (193) mit einem Finger (194), der dazu bestimmt ist, mit der Aussparung in Eingriff zu kommen, gebildet ist, wobei die Aussparung (192) eine vertikale Führungsbahn (1921) beinhaltet, die durch eine quer verlaufende Führungsbahn (1922) verlängert wird, wobei die Aussparung ein im Wesentlichen L-förmiges Profil aufweist, um die Montage der abnehmbaren Paneele (14) an der Halterung (131) zu ermöglichen, insbesondere durch einen Montageablauf, der eine Abwärtsbewegung (C1) entlang einer im Wesentlichen vertikalen Achse (Z), gefolgt von einer seitlichen Bewegung (C2) entlang einer im Wesentlichen quer verlaufenden Achse (Y), die von innen nach außen gerichtet ist, beinhaltet.

2. Anordnung (10) nach dem vorhergehenden Anspruch, **dadurch gekennzeichnet, dass** die Sätze Montageplatten entlang von im Wesentlichen parallelen Querachsen (Y1, Y2) angeordnet sind, die einen vorderen und einen hinteren Rand einer Rinne (133) begrenzen.

3. Anordnung (10) nach dem vorhergehenden Anspruch, **dadurch gekennzeichnet, dass** der vordere Rand (1331) und/oder der hintere Rand (1332) der Rinne (133) seitliche Aufnahmeplatten (1911) und mindestens eine mittige Aufnahmeplatte (1912), insbesondere zwei mittige Aufnahmeplatten (1912), beinhaltet, wobei die seitlichen Aufnahmeplatten (1911) jeweils mit Hilfe einer Einfachschnittstelle (195) mit der Halterung verbunden sind, wobei die mittigen Aufnahmeplatten (1912) mit Hilfe einer einzigen Doppelschnittstelle (196) mit der Halterung verbunden sind.

4. Anordnung (10) nach dem vorhergehenden Anspruch, **dadurch gekennzeichnet, dass** die Einfachschnittstelle (195) eine einzige Aufnahmeplatte (191) beinhaltet, die dazu bestimmt ist, mit einer Steckplatte (193), die an dem einen oder dem anderen der abnehmbaren Paneele (14) befestigt ist, zusammenzuwirken, und die Doppelschnittstelle (196) zwei mittige Aufnahmeplatten (1912) beinhaltet, die dazu bestimmt sind, mit Steckplatten (193), die jeweils an dem einen und dem anderen der abnehmbaren Paneele (14) befestigt sind, zusammenzuwirken.

5. Anordnung (10) nach einem der vorhergehenden Ansprüche, **dadurch gekennzeichnet, dass** das abnehmbare Paneel (14) ein Paneel aus Akustikschaumstoff (25) beinhaltet, das zwischen eine Innenwand (16) und eine Außenhaut (21) eingefügt ist.

6. Anordnung (10) nach einem der vorhergehenden Ansprüche, **dadurch gekennzeichnet, dass** das Dachmodul (13) mindestens ein Mittel zur Verriegelung (20) jedes abnehmbaren Paneels (14) an der Halterung (131), insbesondere ein einziges Verriegelungsmittel, das seitlich an dem Paneel (14) angeordnet ist, beinhaltet.

7. Anordnung (10) nach dem vorhergehenden Anspruch, **dadurch gekennzeichnet, dass** das Verriegelungsmittel (20) vom Typ eines Kniehebels ist, der Folgendes umfasst: eine an dem abnehmbaren Paneel (14), insbesondere an der Innenwand (16), befestigte Basis (27), einen an der Basis drehbar angebrachten und mit einer Zunge (23) verbundenen Hebel (22), einen Haken (24), mit dem die Zunge zur Verrieglung des Paneels (14) in Eingriff kommen soll, wobei der Haken an der Halterung (131), insbesondere im Bereich der Rinne (133), insbesondere im Bereich einer Bodenwand (1331), befestigt ist.

8. Fahrzeug (3), insbesondere vom Typ einer zweisitzigen Limousine, **dadurch gekennzeichnet, dass** es eine Anordnung (10) nach einem der vorhergehenden Ansprüche beinhaltet.

9. Fahrzeug nach dem vorhergehenden Anspruch, **dadurch gekennzeichnet, dass** es ein teilweise abnehmbares Dachmodul (13) beinhaltet, von dem eine Halterung (131) eine einzige Öffnung (136) beinhaltet, die sich vertikal über einer einzigen Sitzreihe (40), insbesondere einem Fahrer- und einem Beifahrersitz, erstreckt.

## Claims

1. Arrangement (10) having a structure (1) of a body (2) of a vehicle (3), the structure (1) having, in the top part (11), rails (112, 113) connected to each other by crossmembers (114, 115), in particular front and rear crossmembers connected respectively to a windscreen (4) or a rear window (5), the arrangement comprising a partially removable roof module (13) such that the structure (1) delimiting a single opening (116) is intended to be closed off by a partially removable roof module (13) having a support on which are reversibly assembled two removable panels (14; 141, 142) each comprising at least one means (19) for fastening to the support (131), **characterized in that** the fastening means (19) comprises at least one assembly of assembly plates that is formed of a female plate (191) with at least one notch (192) and a male plate (193) with a finger (194) intended to engage with the notch, the notch (192) comprising a vertical guide path (1921) extended by a transverse guide path (1922), the notch having a substantially L-shaped profile in order to make possible the assembly of the removable panels (14) to the support (131), in particular via mounting kinematics comprising a descent travel (C1) of substantially vertical axis (Z) followed by a lateral travel (C2) of substantially transverse axis (Y) directed from the inside towards the outside.

2. Arrangement (10) according to the preceding claim, **characterized in that** the assemblies of assembly plates are disposed along substantially parallel transverse axes (Y1, Y2) that delimit front and rear edges of a gutter (133).

3. Arrangement (10) according to the preceding claim, **characterized in that** the front edge (1331) and/or the rear edge (1332) of the gutter (133) comprises lateral female plates (1911) and at least one central female plate (1912), in particular two central female plates (1912), the lateral female plates (1911) being respectively connected to the support via a single interface (195), the central female plates (1912) being connected to the support via just one double interface (196).

4. Arrangement (10) according to the preceding claim, **characterized in that** the single interface (195) comprises a single female plate (191) intended to cooperate with a male plate (193) fastened to one or the other of the removable panels (14), the double interface (196) comprises two central female plates (1912) intended to cooperate with male plates (193) fastened respectively to the one and the other of the removable panels (14).

5. Arrangement (10) according to any one of the preceding claims, **characterized in that** the removable panel (14) comprises a panel of acoustic foam (25) interposed between an inner wall (16) and an outer skin (21).

6. Arrangement (10) according to any one of the preceding claims, **characterized in that** the roof module (13) comprises at least one means (20) for locking each removable panel (14) to the support (131), in particular a single locking means disposed laterally with respect to the panel (14).

7. Arrangement (10) according to the preceding claim, **characterized in that** the locking means (20) is of the type of a toggle latch that has a baseplate (27) fastened to the removable panel (14), in particular to the inner wall (16), a lever (22) mounted so as to rotate on the baseplate and connected to a blade (23), a hook (24) on which the blade is intended to engage to lock the panel (14), the hook being fastened to the support (131), in particular at the gutter (133), in particular at a bottom wall (1331).

8. Vehicle (3), in particular of the type of a two-seater saloon, **characterized in that** it comprises an arrangement (10) according to any one of the preceding claims.

9. Vehicle according to the preceding claim, **characterized in that** it comprises a partially removable roof module (13) of which a support (131) comprises a single opening (136) extending vertically in line with a single row of seats (40), in particular driver and passenger seats.
